# FASCICULE DE BREVET EUROPEEN

(11) **EP 3 218 214 B1**
(45) Date de publication et mention de la délivrance du brevet: **09.01.2019**
(21) Numéro de dépôt: 15798159.8
(22) Date de dépôt: 23.10.2015
(51) Int. Cl.: B60H 1/00, H04B 7/26, B60H 1/22

(54) **PROCÉDÉ DE FOURNITURE DE MESURES DE QUALITÉ D'AIR, EFFECTUÉES PAR DES VÉHICULES AVEC CAPTEUR, À DES VÉHICULES SANS CAPTEUR, ET DISPOSITIF DE CONTRÔLE ASSOCIÉ**
VERFAHREN ZUR BEREITSTELLUNG VON MESSUNGEN DER LUFTQUALITÄT VON KRAFTFAHRZEUGEN, DIE EINEN SENSOR HABEN, ZU KRAFTFAHRZEUGEN, DIE KEINEN SENSOR HABEN, SOWIE DAZUGEHÖRIGE KONTROLLAPPARATUR
METHOD FOR PROVIDING MEASURES OF THE AIR QUALITY PERFORMED BY VEHICLES HAVING A SENSOR TO VEHICLES WITHOUT A SENSOR, AND ASSOCIATED CONTROL APPARATUS

(30) Priorité: 13.11.2014 FR 1460937
(43) Date de publication de la demande: 20.09.2017
(73) Titulaire: PSA Automobiles SA, 78300 Poissy (FR)
(72) Inventeur: PAJOT, Karine, F-91370 Verrieres le Buisson (FR); DUMUR, Denis, F-78990 Elancourt (FR); AUBRY, Vincent, F-91400 Orsay (FR)
(86) Numéro de dépôt international: PCT/FR2015/052871
(87) Numéro de publication internationale: WO 2016/075383

(56) Documents cités:
- WO-A1-2008/084432
- US-A1- 2007 243 808

## Description

L'invention concerne la fourniture de mesures représentatives de la qualité de l'air extérieur à des véhicules dépourvus de capteur d'analyse.

Actuellement, certains véhicules, généralement de type automobile, sont équipés d'un dispositif de surveillance chargé de surveiller la qualité de l'air de leur habitacle. Ce dispositif de surveillance comprend généralement au moins un capteur chargé d'effectuer des mesures représentatives de la concentration d'au moins une espèce chimique (généralement des polluants sous forme gazeuse ou solide) dans l'air qui est contenu dans, ou qui doit alimenter, cet habitacle. Généralement ce type de capteur présente un ou plusieurs éléments résistifs en technologie MOX (« Metal Oxyde semi-conducteur »), chaque élément résistif ayant une résistance variant en fonction de la concentration d'un unique gaz inodore, comme par exemple le dioxyde d'azote (ou NO₂) ou le monoxyde de carbone (ou CO), ou odorant, comme par exemple un gaz carboné de type CₓH_{y}.

On connait le document WO2008084432A1 qui décrit de plus une étape de vérification de la plausibilité de la mesure effectuée par le véhicule à l'aide d'un second capteur.

Lorsque le capteur détecte que la concentration d'une espèce chimique devient supérieure à un seuil, le dispositif de surveillance interdit l'alimentation de l'habitacle en air extérieur (et donc seul de l'air recirculé (c'est-à-dire issu de l'habitacle) alimente ce dernier) et/ou il déclenche une purification de l'air contenu dans l'habitacle.

Ces dispositifs de surveillance étant relativement onéreux, il a été proposé que les véhicules qui en sont équipés transmettent par voie d'ondes aux véhicules, qui sont situés dans leur voisinage mais qui n'en sont pas équipés, les mesures qui sont réalisées par leurs capteurs d'analyse. Ainsi, ces derniers véhicules peuvent également contrôler l'alimentation en air de leur habitacle en fonction des mesures transmises.

Hélas, les mesures de concentration d'espèce(s) chimique(s) réalisées par les capteurs d'analyse des dispositifs de surveillance embarqués ont tendance à dériver au cours du temps, éventuellement en fonction de la concentration, et donc ces mesures deviennent relativement rapidement inexactes. Il en résulte que les véhicules dépourvus de capteur d'analyse ne peuvent pas contrôler correctement l'alimentation en air de leur habitacle.

L'invention a donc notamment pour but d'améliorer la situation.

Elle propose notamment à cet effet un procédé destiné à fournir des mesures représentatives de la concentration d'au moins une espèce chimique dans un air situé à l'extérieur de premiers véhicules qui sont dépourvus de capteur d'analyse.

Ce procédé se caractérise par le fait qu'il comprend :
- une première étape dans laquelle un second véhicule transmet par voie d'ondes au moins une mesure réalisée par un capteur d'analyse embarqué et représentative de la concentration d'au moins une espèce chimique, et
- une seconde étape dans laquelle on compare cette mesure transmise à des valeurs en cours et maximale représentatives respectivement de concentrations en cours et maximale de cette espèce chimique déterminées dans une zone traversée par le second véhicule et analysée par une station d'analyse, et, lorsque cette mesure transmise est comprise entre ces valeurs en cours et maximale, on signale par voie d'ondes au second véhicule que sa mesure transmise est valide et donc qu'il est autorisé à la transmettre par voie d'ondes aux premiers véhicules qui sont situés dans la zone traversée.

En vérifiant les mesures effectuées par le capteur d'analyse d'un véhicule avant que ce dernier les transmette à d'autres véhicules dépourvus de capteur d'analyse, on est sûr que seules les mesures correctes seront transmises.

Le procédé selon l'invention peut comporter d'autres caractéristiques qui peuvent être prises séparément ou en combinaison, et notamment :
- dans un premier mode de réalisation, dans la première étape le second véhicule peut transmettre chaque mesure par voie d'ondes à la station d'analyse, et dans la seconde étape cette station d'analyse peut réaliser la comparaison et signaler par voie d'ondes au second véhicule si sa mesure transmise est valide ;
- dans un second mode de réalisation, dans la première étape le second véhicule peut transmettre chaque mesure par voie d'ondes à un serveur d'informations qui reçoit au moins chaque valeur en cours déterminée par la station d'analyse, et dans la seconde étape ce serveur d'informations peut réaliser la comparaison et signaler par voie d'ondes au second véhicule si sa mesure transmise est valide ;
- dans la seconde étape, lorsque la mesure transmise n'est pas valide on peut le signaler par voie d'ondes au second véhicule pour lui interdire de la transmettre par voie d'ondes aux premiers véhicules qui sont situés dans sa zone traversée et pour requérir un étalonnage de son capteur ;
- dans la seconde étape, lorsque la mesure transmise est valide, on peut la stocker en correspondance d'autres mesures valides, précédemment reçues de seconds véhicules, et d'autres valeurs en cours de la station d'analyse, et on peut l'utiliser pour améliorer la précision de la valeur en cours.

L'invention propose également un dispositif dédié au contrôle de mesures représentatives de la concentration d'au moins une espèce chimique dans un air situé à l'extérieur de premiers véhicules dépourvus de capteur d'analyse.

Ce dispositif se caractérise par le fait qu'il comprend des moyens de contrôle agencés, en cas de réception d'une mesure réalisée par un capteur d'analyse embarqué dans un second véhicule et représentative de la concentration d'au moins une espèce chimique, pour comparer cette mesure transmise à des valeurs en cours et maximale représentatives respectivement de concentrations en cours et maximale de cette espèce chimique déterminées dans une zone traversée par le second véhicule et analysée par une station d'analyse, et, lorsque cette mesure transmise est comprise entre les valeurs en cours et maximale, pour déclencher une transmission par voie d'ondes au second véhicule d'un message signalant que sa mesure transmise est valide et donc qu'il est autorisé à la transmettre par voie d'ondes aux premiers véhicules qui sont situés dans sa zone traversée.

Par exemple, les moyens de contrôle peuvent être agencés, lorsque la mesure transmise n'est pas valide, pour déclencher une transmission par voie d'ondes au second véhicule d'un message signalant que sa mesure transmise n'est pas valide afin de lui interdire de la transmettre par voie d'ondes aux premiers véhicules qui sont situés dans sa zone traversée et pour requérir un étalonnage de son capteur.

Egalement par exemple, les moyens de contrôle peuvent être agencés, lorsque la mesure transmise est valide, pour la stocker en correspondance d'autres mesures valides, précédemment reçues de seconds véhicules, et d'autres valeurs en cours de la station d'analyse concernée et pour l'utiliser afin d'améliorer la précision de la valeur en cours qui est utilisée lors de la comparaison.

L'invention propose également une station d'analyse, propre à déterminer des valeurs en cours représentatives de la concentration en cours d'au moins une espèce chimique dans l'air extérieur situé dans une zone, et comprenant un dispositif de contrôle du type de celui présenté ci-avant.

L'invention propose également un serveur d'informations, propre à recevoir au moins des valeurs en cours représentatives de la concentration en cours d'au moins une espèce chimique dans l'air extérieur situé dans des zones et déterminées par des stations d'analyse, et comprenant un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement des voies de circulation sur lesquelles circulent des premiers et second véhicules et bordées par une station d'analyse comprenant un exemple de réalisation d'un dispositif de contrôle selon l'invention,
- la figure 2 illustre schématiquement et fonctionnellement des voies de circulation sur lesquelles circulent des premiers et second véhicules et bordées par une station d'analyse couplée à un serveur d'informations comprenant un exemple de réalisation d'un dispositif de contrôle selon l'invention, et
- la figure 3 illustre un exemple d'algorithme mettant en oeuvre un procédé de fourniture de mesures de qualité de l'air selon l'invention.

L'invention a notamment pour but de proposer un procédé de fourniture destiné à permettre la fourniture de mesures, représentatives de la concentration d'au moins une espèce chimique dans un air situé à l'extérieur de premiers véhicules V1ⱼ dépourvus de capteur d'analyse, et un dispositif de contrôle DC associé.

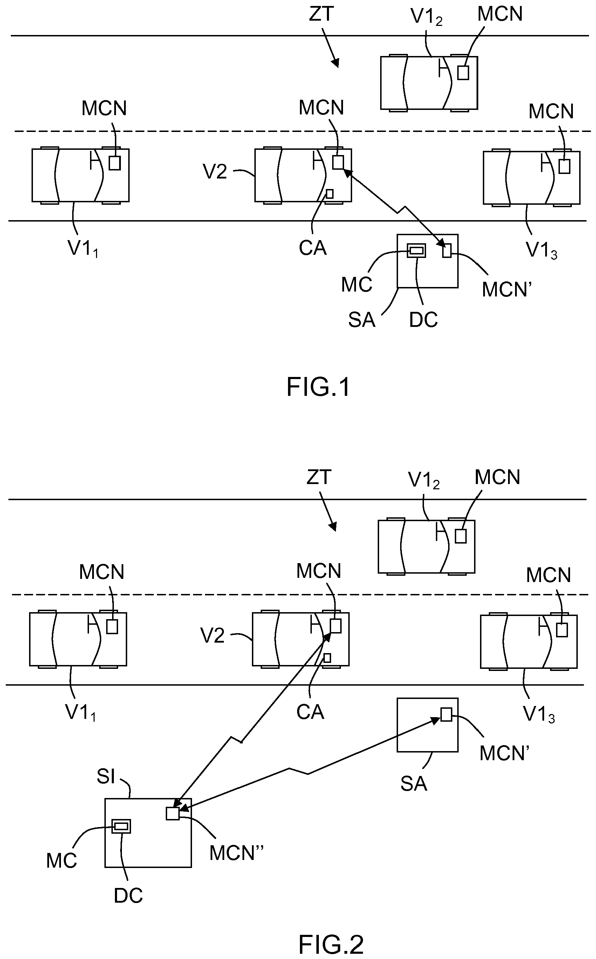

On a schématiquement et fonctionnellement représenté sur les figures 1 et 2 deux voies de circulation, sur lesquelles circulent des premiers véhicules V1ⱼ (j = 1 à 3), dépourvus de capteur d'analyse de la qualité de l'air, et un second véhicule V2, équipé d'au moins un capteur CA d'analyse de la qualité de l'air. Ces voies de circulation sont par ailleurs bordées par une station d'analyse SA qui est chargée d'effectuer des analyses de la qualité de l'air extérieur dans une zone ZT qui est traversée par des premiers V1ⱼ et seconds V2 véhicules.

On entend ici par « capteur d'analyse CA » un capteur chargé d'effectuer des mesures qui sont représentatives de la concentration d'au moins une espèce chimique dans l'air qui est issu de l'extérieur de son second véhicule V2.

On notera que dans l'exemple non limitatif illustré sur les figures 1 et 2, le second véhicule V2 ne comprend qu'un seul capteur (d'analyse) CA, par exemple installé sous son capot moteur. Par exemple, ce capteur CA peut être installé dans le conduit (ou à proximité du conduit) qui est chargé d'alimenter l'installation de chauffage/climatisation du second véhicule V2 en air extérieur. Egalement par exemple, le capteur CA peut comporter au moins un élément résistif en technologie MOX (« Metal Oxyde semi-conducteur ») et ayant une résistance variant en fonction de la concentration d'un unique gaz inodore, comme par exemple le dioxyde d'azote (ou NO₂) ou le monoxyde de carbone (ou CO), ou odorant, comme par exemple un gaz carboné de type CₓH_{y}. De préférence, le capteur CA comporte au moins deux éléments résistifs différents de manière à mesurer des premières valeurs d'au moins deux résistances représentatives des concentrations respectives d'au moins deux gaz différents.

Par ailleurs, on entend ici par « station d'analyse SA » une station (ou un poste) disposant de capteur(s) régulièrement étalonné(s) et chargé(s) de déterminer la valeur en cours de la concentration d'au moins une espèce chimique dans l'air extérieur situé dans sa zone d'analyse ZT.

Dans ce qui suit, on considère, à titre d'exemple non limitatif, que les premiers V1ⱼ et second V2 véhicules sont de type automobile. Il s'agit par exemple de voitures. Mais l'invention n'est pas limitée à ce type de véhicule. Elle concerne en effet tout type de véhicule terrestre comportant au moins un habitacle dans lequel la pollution de l'air doit être surveillée, et pouvant circuler dans des zones où des stations d'analyse effectuent des analyses de la qualité de l'air extérieur.

Comme indiqué plus haut, l'invention propose notamment un procédé de fourniture destiné à permettre la fourniture à des premiers véhicules V1ⱼ (dépourvus de capteur d'analyse) de mesures mt(V2) effectuées par le capteur d'analyse CA d'un second véhicule V2 et représentatives de la concentration d'au moins une espèce chimique dans l'air extérieur. Ce procédé (de fourniture) comprend au moins des première et seconde étapes décrites plus loin. Ce procédé peut être, par exemple, mis en oeuvre de façon périodique (par programmation), notamment lorsque les mesures sont réalisées périodiquement (et donc en continu, par exemple dans le cadre d'une analyse de la qualité de l'air), ou bien chaque fois qu'un second véhicule V2 dispose de mesure(s) effectuée(s) par un capteur d'analyse CA embarqué, par exemple à la demande de son conducteur ou consécutivement à la réception d'un message interne ou externe requérant une telle mesure.

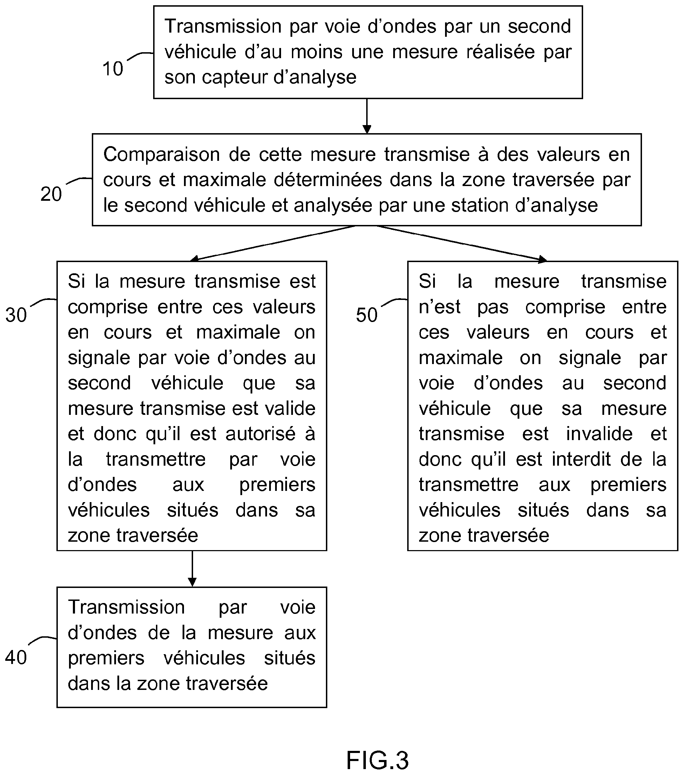

Dans une première étape, du procédé selon l'invention, un second véhicule V2 transmet par voie d'ondes au moins une mesure mt(V2) réalisée par son capteur d'analyse CA embarqué et représentative de la concentration d'au moins une espèce chimique. Cette transmission correspond à la sous-étape 10 de l'exemple non limitatif d'algorithme de la figure 3.

Comme on le verra plus loin, cette transmission par voie d'ondes peut se faire à destination d'une station d'analyse SA voisine (figure 1), ou d'un serveur d'informations SI (figure 2). Par ailleurs, cette transmission par voie d'ondes nécessite que chaque second véhicule V2 comprenne un module de communication MCN.

Dans une seconde étape, du procédé selon l'invention, on commence par comparer la (chaque) mesure mt(V2) transmise par le second véhicule V2 (et relative à une espèce chimique) à des valeurs en cours v_{ec}(SA) et maximale vₘₐₓ(SA) qui sont représentatives respectivement des concentrations en cours et maximale de cette espèce chimique et qui ont été déterminées dans une zone ZT traversée par ce second véhicule V2 et analysée par une station d'analyse SA.

On notera que la valeur en cours v_{ec}(SA) est la toute dernière déterminée par la station d'analyse SA dans la zone traversée ZT, et la valeur maximale vₘₐₓ(SA) résulte, par exemple, d'une analyse de l'ensemble des valeurs en cours v_{ec}(SA) déterminées dans la zone traversée ZT par cette station d'analyse SA depuis sa mise en route. Cette valeur maximale vₘₐₓ(SA) peut éventuellement dépendre du jour de la semaine concerné et/ou de l'heure courante concernée. On comprendra en effet que la concentration maximale peut varier en fonction du trafic, lequel est généralement fonction du jour de la semaine et/ou de l'heure.

On réalise une comparaison par rapport à deux valeurs (v_{ec}(SA) et vₘₐₓ(SA)) car on considère ici que la valeur en cours v_{ec}(SA) est une valeur minimale du fait qu'elle n'a pas été réalisée au coeur même du trafic. La mesure mt(V2) transmise par le second véhicule V2, et effectuée au coeur du trafic, ne peut donc être que supérieure ou égale à cette valeur minimale v_{ec}(SA) et inférieure ou égale à la valeur maximale vₘₐₓ(SA), lorsqu'elle est valide.

Cette comparaison correspond à la sous-étape 20 de l'exemple non limitatif d'algorithme de la figure 3.

Ensuite, lorsque la mesure transmise mt(V2) est comprise entre les valeurs en cours v_{ec}(SA) et maximale vₘₐₓ(SA) (soit v_{ec}(SA) ≤ mt(V2) ≤ vₘₐₓ(SA)), on signale par voie d'ondes au second véhicule V2 que sa mesure transmise mt(V2) est valide et donc qu'il est autorisé à la transmettre par voie d'ondes aux premiers véhicules V1ⱼ qui sont situés dans la zone traversée ZT. Ce signalement correspond à la sous-étape 30 de l'exemple non limitatif d'algorithme de la figure 3.

Le second véhicule V2 peut alors transmettre par voie d'ondes sa dernière mesure mt(V2) aux premiers véhicules V1ⱼ qui sont situés dans son environnement proche. Cette transmission correspond à la sous-étape 40 de l'exemple non limitatif d'algorithme de la figure 3. On notera que cette transmission inter-véhicules nécessite que les premiers véhicules V1ⱼ soient équipés d'un module de communication MCN pour échanger avec les modules de communication MCN des seconds véhicules V2. Par ailleurs, cette transmission se fait de préférence directement, par exemple par WiFi ou Bluetooth.

Si la mesure transmise mt(V2) n'est pas comprise entre les valeurs en cours v_{ec}(SA) et maximale vₘₐₓ(SA) (soit mt(V2) < v_{ec}(SA)), on signale par voie d'ondes au second véhicule V2 que sa mesure transmise mt(V2) n'est pas valide et donc qu'il est interdit de la transmettre par voie d'ondes aux premiers véhicules V1ⱼ qui sont situés dans la zone traversée ZT, et que son capteur CA doit être étalonné. Ce signalement correspond à la sous-étape 50 de l'exemple non limitatif d'algorithme de la figure 3.

On notera que la seconde étape, du procédé selon l'invention, peut être mise en oeuvre au moyen d'un dispositif de contrôle DC comprenant au moins des moyens de contrôle MC.

Comme illustré non limitativement sur la figure 1, un dispositif de contrôle DC peut, par exemple, faire partie de chaque station d'analyse SA ou de certaines au moins d'entre elles. Mais cela n'est pas obligatoire. En effet, et comme illustré non limitativement sur la figure 2, un dispositif de détection DD peut, par exemple, faire partie d'un serveur d'informations SI auquel est couplée au moins une station d'analyse SA qui l'alimente au moins en valeurs en cours v_{ec}(SA).

Ce serveur d'informations SI fait, par exemple, partie d'un service d'information qui est mis à disposition par une entreprise publique ou privée comprenant des stations d'analyse (ou de mesure) de la qualité de l'air SA, installées à proximité de voies de circulation empruntées par les véhicules V1ⱼ et V2. Ce serveur d'informations SI ou son dispositif de contrôle DC, stocke, de préférence, toutes les valeurs en cours v_{ec}(SA) qui lui sont successivement transmises par les stations d'analyse SA en correspondance de leurs identifiants respectifs (représentatifs de leurs positions géographiques). Il (SI ou DC) dispose par conséquent, pour chaque zone analysée par une station d'analyse SA, d'un historique de valeurs à partir duquel il (SC ou DC) peut déduire au moins une valeur maximale vₘₐₓ(SA), si cette dernière (vₘₐₓ(SA)) ne lui est pas transmise par la station d'analyse SA.

Le stockage des valeurs en cours v_{ec}(SA) et des valeurs maximales vₘₐₓ(SA) de chaque zone analysée peut se faire dans des moyens de stockage du dispositif de contrôle DC ou du serveur d'informations SI. Ces moyens de stockage peuvent, par exemple, se présenter sous la forme d'une mémoire, éventuellement de type logiciel.

Dans le premier exemple de la figure 1, le second véhicule V2 transmet chaque mesure mt(V2) par voie d'ondes à une station d'analyse SA, puis cette station d'analyse SA réalise la comparaison et signale par voie d'ondes au second véhicule V2 si sa mesure transmise mt(V2) est valide. Par conséquent, chaque station d'analyse SA doit comprendre un module de communication MCN' lui permettant d'échanger des messages par voie d'ondes avec les modules de communication MCN des seconds véhicules V2 qui traversent la zone ZT dans laquelle elle effectue ses analyses. La communication peut se faire soit directement, par exemple par WiFi ou Bluetooth, soit indirectement, par exemple via un réseau de communication non filaire. Ici, c'est la station d'analyse SA qui détermine la valeur maximale vₘₐₓ(SA).

Dans le second exemple de la figure 2, le second véhicule V2 transmet chaque mesure mt(V2) par voie d'ondes à un serveur d'informations SI (recevant au moins chaque valeur en cours v_{ec}(SA) déterminée par la station d'analyse SA), puis ce serveur d'informations SI réalise la comparaison et signale par voie d'ondes au second véhicule V2 si sa mesure transmise mt(V2) est valide. Par conséquent, chaque station d'analyse SA doit comprendre un module de communication MCN' et le serveur d'informations SI doit comprendre un module de communication MCN", afin de pouvoir échanger des messages par voie d'ondes. Cette communication peut se faire via un réseau de communication filaire ou non filaire. De plus, le module de communication MCN" du serveur d'informations SI permet également à ce dernier (SI) d'échanger des messages par voie d'ondes avec les modules de communication MCN des seconds véhicules V2 qui traversent les zones ZT dans lesquelles les stations d'analyse SA qui lui sont couplées effectuent leurs analyses. Cette autre communication se fait via un réseau de communication non filaire. On notera que lorsqu'un second véhicule V2 transmet au serveur d'informations SI une mesure mt(V2), il accompagne cette dernière (mt(V2)) de sa position géographique, afin qu'il puisse déterminer la station d'analyse SA qui analyse la zone ZT qu'il est en train de traverser. La position en cours du second véhicule V2 est, par exemple, fournie par un système de guidage par satellites embarqué.

On notera que dans la seconde étape, lorsque la mesure transmise mt(V2) est valide, il est avantageux de la stocker en correspondance d'autres mesures valides précédemment reçues de seconds véhicules V2 et d'autres valeurs en cours v_{ec}(SA) de la station d'analyse SA concernée. Ce stockage se fait préférentiellement dans l'équipement qui met en oeuvre la seconde étape (à savoir la station d'analyse SA ou le serveur d'informations SI). Ensuite, on peut utiliser cette mesure transmise valide mt(V2) pour améliorer la précision de la valeur en cours v_{ec}(SA) de la station d'analyse SA concernée.

On notera également que chaque dispositif de contrôle DC peut être réalisé soit sous la forme de modules logiciels (ou informatiques (ou encore « software »)) ; on est alors en présence d'un produit programme d'ordinateur comprenant un jeu d'instructions qui, lorsqu'il est exécuté par des moyens de traitement de type circuits électroniques (ou « hardware »), est propre à mettre en oeuvre une partie du procédé de fourniture, soit sous la forme d'une combinaison de modules logiciels et de circuits électroniques.

Grâce à la comparaison de chaque mesure transmise par un second véhicule à deux valeurs précises et fiables, on est désormais certain que si une mesure est transmise à des premiers véhicules (dépourvus de capteur d'analyse), c'est qu'elle est valide et donc utilisable par ces derniers pour contrôler l'alimentation en air de leur habitacle. Par ailleurs, le résultat de cette comparaison permet également au second véhicule de savoir si son capteur d'analyse doit, ou non, faire l'objet d'un étalonnage.

## Revendications

1. Procédé de fourniture de mesures représentatives de la concentration d'au moins une espèce chimique dans un air situé à l'extérieur de premiers véhicules (V1ⱼ) dépourvus de capteur d'analyse, **caractérisé en ce qu'**il comprend une première étape dans laquelle un second véhicule (V2) transmet par voie d'ondes au moins une mesure réalisée par un capteur d'analyse (CA) embarqué et représentative de la concentration d'au moins une espèce chimique, et une seconde étape dans laquelle on compare ladite mesure transmise à des valeurs en cours et maximale représentatives respectivement de concentrations en cours et maximale de ladite espèce chimique déterminées dans une zone traversée par ledit second véhicule (V2) et analysée par une station d'analyse (SA), et, lorsque ladite mesure transmise est comprise entre lesdites valeurs en cours et maximale, on signale par voie d'ondes audit second véhicule (V2) que ladite mesure transmise est valide et donc qu'il est autorisé à la transmettre par voie d'ondes auxdits premiers véhicules (V1ⱼ) situés dans ladite zone traversée.

2. Procédé selon la revendication 1, **caractérisé en ce que** dans ladite première étape ledit second véhicule (V2) transmet chaque mesure par voie d'ondes à ladite station d'analyse (SA), et dans ladite seconde étape ladite station d'analyse (SA) réalise ladite comparaison et signale par voie d'ondes audit second véhicule (V2) si ladite mesure transmise est valide.

3. Procédé selon la revendication 1, **caractérisé en ce que** dans ladite première étape ledit second véhicule (V2) transmet chaque mesure par voie d'ondes à un serveur d'informations (SI) recevant au moins chaque valeur en cours déterminée par ladite station d'analyse (SA), et dans ladite seconde étape ledit serveur d'informations (SI) réalise ladite comparaison et signale par voie d'ondes audit second véhicule (V2) si ladite mesure transmise est valide.

4. Procédé selon l'une des revendications 1 à 3, **caractérisé en ce que** dans ladite seconde étape lorsque ladite mesure transmise n'est pas valide on le signale par voie d'ondes audit second véhicule (V2) pour lui interdire de la transmettre par voie d'ondes auxdits premiers véhicules (V1ⱼ) situés dans ladite zone traversée et requérir un étalonnage de son capteur (CA).

5. Procédé selon l'une des revendications 1 à 4, **caractérisé en ce que** dans ladite seconde étape lorsque ladite mesure transmise est valide, on la stocke en correspondance d'autres mesures valides, précédemment reçues de seconds véhicules (V2), et d'autres valeurs en cours de ladite station d'analyse (SA), et on l'utilise pour améliorer la précision de ladite valeur en cours.

6. Dispositif (DC) de contrôle de mesures représentatives de la concentration d'au moins une espèce chimique dans un air situé à l'extérieur de premiers véhicules (V1ⱼ) dépourvus de capteur d'analyse, **caractérisé en ce qu'**il comprend des moyens de contrôle (MC) agencés, en cas de réception d'une mesure réalisée par un capteur d'analyse (CA) embarqué dans un second véhicule (V2) et représentative de la concentration d'au moins une espèce chimique, pour comparer ladite mesure transmise à des valeurs en cours et maximale représentatives respectivement de concentrations en cours et maximale de ladite espèce chimique déterminées dans une zone traversée par ledit second véhicule (V2) et analysée par une station d'analyse (SA), et, lorsque ladite mesure transmise est comprise entre lesdites valeurs en cours et maximale, pour déclencher une transmission par voie d'ondes audit second véhicule (V2) d'un message signalant que ladite mesure transmise est valide et donc qu'il est autorisé à la transmettre par voie d'ondes auxdits premiers véhicules (V1ⱼ) situés dans ladite zone traversée.

7. Dispositif selon la revendication 6, **caractérisé en ce que** lesdits moyens de contrôle (MC) sont agencés, lorsque ladite mesure transmise n'est pas valide, pour déclencher une transmission par voie d'ondes audit second véhicule (V2) d'un message signalant que ladite mesure transmise n'est pas valide afin de lui interdire de la transmettre par voie d'ondes auxdits premiers véhicules (V1ⱼ) situés dans ladite zone traversée et requérir un étalonnage de son capteur (CA).

8. Dispositif selon l'une des revendications 6 et 7, **caractérisé en ce que** lesdits moyens de contrôle (MC) sont agencés, lorsque ladite mesure transmise est valide, pour la stocker en correspondance d'autres mesures valides, précédemment reçues de seconds véhicules (V2), et d'autres valeurs en cours de la station d'analyse (SA) concernée et pour l'utiliser afin d'améliorer la précision de ladite valeur en cours utilisée lors de ladite comparaison.

9. Station d'analyse (SA) propre à déterminer des valeurs en cours représentatives de la concentration en cours d'au moins une espèce chimique dans l'air extérieur situé dans une zone, **caractérisée en ce qu'**elle comprend un dispositif de contrôle (DC) selon l'une des revendications 6 à 8.

10. Serveur d'informations (SI) propre à recevoir au moins des valeurs en cours représentatives de la concentration en cours d'au moins une espèce chimique dans l'air extérieur situé dans des zones et déterminées par des stations d'analyse (SA), **caractérisé en ce qu'**il comprend un dispositif de contrôle (DC) selon l'une des revendications 6 à 8.

## Patentansprüche

1. Verfahren zur Bereitstellung von Messungen, die für die Konzentration mindestens einer chemischen Spezies in einer Luft repräsentativ sind, die sich außerhalb erster Fahrzeuge (V1ⱼ) befindet, die keinen Analysesensor aufweisen, **dadurch gekennzeichnet, dass** es einen ersten Schritt umfasst, bei dem ein zweites Fahrzeug (V2) über Wellen mindestens eine Messung überträgt, die von einem fahrzeugeigenen Analysesensor (CA) ausgeführt wird und für die Konzentration mindestens einer chemischen Spezies repräsentativ ist, und einen zweiten Schritt, bei dem die übertragene Messung mit einem aktuellen und einem maximalen Wert verglichen wird, die jeweils für aktuelle und maximale Konzentration der chemischen Spezies repräsentativ sind, die in einer Zone bestimmt werden, die von dem zweiten Fahrzeug (V2) durchquert wird, und die von einer Analysestation (SA) analysiert werden, und, wenn die übertragene Messung zwischen dem aktuellen und dem maximalen Wert liegt, durch Wellen dem zweiten Fahrzeug (V2) gemeldet wird, dass die übertragene Messung gültig ist, und dass es daher gestattet ist, sie über Wellen zu den ersten Fahrzeugen (V1ⱼ), die sich in der durchquerten Zone befinden, zu übertragen.

2. Verfahren nach Anspruch 1, **dadurch gekennzeichnet, dass** bei dem ersten Schritt das zweite Fahrzeug (V2) jede Messung durch Wellen zu der Analysestation (SA) überträgt, und bei dem zweiten Schritt die Analysestation (SA) den Vergleich ausführt und über Wellen dem zweiten Fahrzeug (V2) meldet, ob die übertragene Messung gültig ist.

3. Verfahren nach Anspruch 1, **dadurch gekennzeichnet, dass** das Fahrzeug (V2) bei dem ersten Schritt jede Messung über Wellen zu einem Informationenserver (SI) überträgt, der mindestens jeden aktuellen Wert empfängt, der von der Analysestation (SA) bestimmt wird, und dass bei dem zweiten Schritt der Informationenserver (SI) den Vergleich ausführt und über Wellen dem zweiten Fahrzeug (V2) meldet, ob die übertragene Messung gültig ist.

4. Verfahren nach einem der Ansprüche 1 bis 3, **dadurch gekennzeichnet, dass** bei dem zweiten Schritt, wenn die übertragene Messung nicht gültig ist, das dem zweiten Fahrzeug (V2) über Wellen gemeldet wird, um ihm zu untersagen, sie über Wellen an die anderen ersten Fahrzeuge (V1ⱼ), die sich in der durchquerten Zone befinden, zu übertragen und ein Eichen seines Sensors (CA) anzufordern.

5. Verfahren nach einem der Ansprüche 1 bis 4, **dadurch gekennzeichnet, dass** bei dem zweiten Schritt, wenn die übertragene Messung gültig ist, sie in Entsprechung mit anderen gültigen Messungen, die zuvor von zweiten Fahrzeugen (V2) empfangen werden, und andere aktuelle Werte der Analysestation (SA) speichert und sie verwendet, um die Präzision des aktuellen Werts zu verbessern.

6. Vorrichtung (DC) zum Kontrollieren von Messungen, die für die Konzentration mindestens einer chemischen Spezies in einer Luft, die sich außerhalb von ersten Fahrzeugen (V1ⱼ) befindet, die keinen Analysesensor aufweisen, repräsentativ sind, **dadurch gekennzeichnet, dass** sie Kontrollmittel (MC) umfasst, die eingerichtet sind, um im Falle eines Empfangs einer Messung, die von einem fahrzeugeigenen Analysesensor (CA) in einem zweiten Fahrzeug (V2) ausgeführt wird und für die Konzentration mindestens einer chemischen Spezies repräsentativ ist, die übertragene Messung mit aktuellen und maximalen Werten zu vergleichen, die jeweils für die aktuelle und die maximale Konzentration der chemischen Spezies, die in einer von dem zweiten Fahrzeug (V2) durchquerten Zone bestimmt werden, und die von einer Analysestation (SA) analysiert werden, zu vergleichen, und, wenn die übertragene Messung zwischen dem aktuellen und dem maximalen Wert liegt, eine Übertragung über Wellen zu dem zweiten Fahrzeug (V2) einer Nachricht auszulösen, die meldet, dass die übertragene Messung gültig ist, und dass es daher gestattet ist, sie über Wellen zu den ersten Fahrzeugen (V1ⱼ), die sich in der durchquerten Zone befinden, zu übertragen.

7. Vorrichtung nach Anspruch 6, **dadurch gekennzeichnet, dass** die Kontrollmittel (MC) eingerichtet sind, um, wenn die übertragene Messung nicht gültig ist, eine Übertragung über Wellen zu dem zweiten Fahrzeug (V2) einer Nachricht auszulösen, die meldet, dass die übertragene Messung nicht gültig ist, um es ihm zu untersagen, sie über Wellen zu den ersten Fahrzeugen (V1ⱼ), die sich in der durchquerten Zone befinden, zu übertragen, und ein Eichen seines Sensors (CA) anzufordern.

8. Vorrichtung nach einem der Ansprüche 6 und 7, **dadurch gekennzeichnet, dass** die Kontrollmittel (MC) eingerichtet sind, um, wenn die übertragene Messung gültig ist, sie in Entsprechung mit anderen gültigen Werten, die zuvor von zweiten Fahrzeugen (V2) empfangen wurden, und andere aktuelle Werte der betreffenden Analysestation (SA) zu speichern und sie zu verwenden, um die Präzision des aktuellen Werts, der bei dem Vergleich verwendet wird, zu verbessern.

9. Analysestation (SA), die geeignet ist, um aktuelle Werte zu bestimmen, die für die aktuelle Konzentration mindestens einer chemischen Spezies in der Außenluft, die sich in einer Zone befindet, zu bestimmen, **dadurch gekennzeichnet, dass** sie eine Kontrollvorrichtung (DC) nach einem der Ansprüche 6 bis 8 umfasst.

10. Informationenserver (SI), der geeignet ist, um mindestens aktuelle Werte zu empfangen, die für die aktuelle Konzentration mindestens einer chemischen Spezies in der Außenluft, die sich in Zonen befindet, die von Analysestationen (SA) bestimmt werden, zu empfangen, **dadurch gekennzeichnet, dass** sie eine Kontrollvorrichtung (DC) nach einem der Ansprüche 6 bis 8 umfasst.

## Claims

1. A method for providing representative measures of the concentration of at least one chemical species in an air situated outside first vehicles (V1ⱼ) which are mot provided with an analysis sensor, **characterized in that** it includes a first step in which a second vehicle (V2) wirelessly transmits at least one measure carried out by an on-board analysis sensor (CA) and which is representative of the concentration of at least one chemical species, and a second step in which said transmitted measure is compared to current and maximum values which are representative respectively of current and maximum concentrations of said chemical species determined in an area through which said second vehicle (V2) passes and analysed by an analysis station (SA), and, when said transmitted measure is comprised between said current and maximum values, wireless signalling is carried out to said second vehicle (V2) that said transmitted measure is valid and therefore it is authorized to transmit it wirelessly to said first vehicles (V1ⱼ) situated in said area which is passed through.

2. The method according to claim 1, **characterized in that** in said first step, said second vehicle (V2) transmits each measure wirelessly to said analysis station (SA), and in said second step said analysis statin (SA) carries out said comparison and signals wirelessly to said second vehicle (V2) if said transmitted measure is valid.

3. The method according to claim 1, **characterized in that** in said first step, said second vehicle (V2) transmits each measure wirelessly to an information server (SI) receiving at least each current value determined by said analysis station (SA), and in said second step said information server (SI) carries out said comparison and signals wirelessly to said second vehicle (V2) if said transmitted measure is valid.

4. The method according to one of claims 1 to 3, **characterized in that** in said second step, when said transmitted measure is not valid, this is signalled is wirelessly to said second vehicle (V2) to prohibit it from wirelessly transmitting it to said first vehicles (V1ⱼ) situated in said area which is passed through and to require a calibration of its sensor (CA).

5. The method according to one of claims 1 to 4, **characterized in that** in said second step when said transmitted measure is valid, it is stored in correspondence with other valid measures, previously received from second vehicles (V2), and with other current values of said analysis station (SA), and it is used to improve the precision of said current value.

6. A control apparatus (DC) of representative measures of the concentration of at least one chemical species in an air situated outside first vehicles (V1ⱼ) which are not provided with an analysis sensor, **characterized in that** it includes control means (MC) arranged, in the case of reception of a measure carried out by an on-board analysis sensor (CA) in a second vehicle (V2) and representative of the concentration of at least one chemical species, for comparing said transmitted measure with current and maximum values representative respectively of current and maximum concentrations of said chemical species determined in an area passed through by said second vehicle (V2) and analysed by an analysis station (SA), and, when said transmitted measure is comprised between said current and maximum values, for triggering a wireless transmission to said second vehicle (V2) of a message signalling that said transmitted measure is valid and therefore that it is authorized to transmit it wirelessly to said first vehicles (V1ⱼ) situated in said area which is passed through.

7. The apparatus according to claim 6, **characterized in that** said control means (MC) are arranged, when said transmitted measure is not valid, for triggering a wireless transmission to said second vehicle (V2) of a message signalling that said transmitted measure is not valid, so as to prohibit it from transmitting it wirelessly to said first vehicles (V1ⱼ) situated in said zone which is passed through and to require a calibration of its sensor (CA).

8. The apparatus according to one of claims 6 and 7, **characterized in that** said control means (MC) are arranged, when said transmitted measure is valid, for storing it in correspondence with other valid measures, previously received from second vehicles (V2), and with other current values of the analysis station (SA) concerned, and for using it so as to improve the precision of said current value which is used during said comparison.

9. An analysis station (SA) suitable to determine current values representative of the current concentration of at least one chemical species in the exterior air situated in an area, **characterized in that** it includes a control device (DC) according to one of claims 6 to 8.

10. An information server (SI) suitable to receive at least current values representative of the current concentration of at least one chemical species in the exterior air situated in areas and determined by analysis stations (SA), **characterized in that** it includes a control device (DC) according to one of claims 6 to 8.
